# EUROPÄISCHE PATENTSCHRIFT

(11) **EP 2 602 495 B1**
(45) Veröffentlichungstag und Bekanntmachung des Hinweises auf die Patenterteilung: **21.06.2017**
(21) Anmeldenummer: 12195936.5
(22) Anmeldetag: 06.12.2012
(51) Int. Cl.: F16B 21/18

(54) **Baugruppe für ein Baukastengetriebe**
Component assembly for a component gearbox
Module de construction pour une transmission modulaire

(30) Priorität: 06.12.2011 DE 102011087848
(43) Veröffentlichungstag der Anmeldung: 12.06.2013
(73) Patentinhaber: Getriebebau NORD GmbH & Co. KG, 22941 Bargteheide (DE)
(72) Erfinder: Bouché, Dr. Bernhard, 22941 Bargteheide (DE); Petersen, Dr. Detlev, 21279 Appel (DE)
(74) Vertreter: Glawe, Delfs, Moll

(56) Entgegenhaltungen:
- EP-A1- 0 515 006
- DE-U- 1 969 834
- US-A- 4 256 010
- US-A- 4 844 211

## Beschreibung

Die Erfindung betrifft eine Baugruppe für ein Baukastengetriebe sowie ein mit der Baugruppe versehenes Baukastengetriebe. Die Baugruppe umfasst einen Bohrungssicherungsring, der ein erstes und ein zweites Betätigungselement sowie ein kreisbogenförmiges Federelement umfasst, das ein erstes und ein gegenüberliegendes zweites Ende aufweist, wobei die Enden eine Ausnehmung des Federelements begrenzen. Weiter betrifft die Erfindung ein Verfahren zur Montage und Demontage von erfindungsgemäßen Baugruppen an das Baukastengetriebe.

Ein vorbekannter Bohrungssicherungsring dient in der Regel als axiale Sicherung bzw. axiale Fixierung von Baugruppen innerhalb von Aufnahmebohrungen. Dazu ist die jeweilige Baugruppe in zwei Hälften geteilt, zwischen denen der Bohrungssicherungsring angeordnet ist. Er greift im montierten Zustand in eine innenseitig vorgesehene Ringnut der Aufnahmebohrung ein. Er nimmt auf diese Weise axial auf die Baugruppe wirkende Kräfte auf und überträgt sie auf die Ringnut der Aufnahmebohrung. Ebenso werden axiale Kräfte von der Aufnahmebohrung auf die Baugruppe übertragen.

Bohrungssicherungsringe sind geschlitzte Ringe. Sie weisen Federelemente auf, die eine elastische Verformung des Bohrungssicherungsrings ermöglichen. Ein Bohrungssicherungsring für eine Aufnahmebohrung weist einen Außendurchmesser auf, der größer als der Innendurchmesser der Aufnahmebohrung ist. Um in die Aufnahmebohrung zur Montage eingeführt werden zu können, muss der Bohrungssicherungsring elastisch so verformt werden, dass sein Außendurchmesser kleiner als der Innendurchmesser der Aufnahmebohrung ist. Die Verformung wird über Betätigungselemente bewirkt, die in der Regel mit Augenlöchern versehen und an den Enden des Federelements angeordnet sind. Der im Folgenden als Ausnehmung bezeichnete Schlitz des Bohrungssicherungsrings wird dabei zusammengedrückt. Dabei ist die Außenkontur eines Bohrungssicherungsrings etwa kreisförmig. Dies ermöglicht die Einführung des gespannten Bohrungssicherungsrings in eine Bohrung.

In die Augenlöcher greift eine spezielle Zange ein, durch die der Benutzer den Bohrungssicherungsring spannen kann. Bei einem Bohrungssicherungsring wird das Spannen durch Verkleinern der Ausnehmung bewirkt. Um dies zu ermöglichen, muss die Ausnehmung genügend breit dimensioniert sein. Nach der Anordnung in der Bohrung drückt das Federelement den Bohrungssicherungsring in die Ringnut hinein, so dass er in ihr einrastet. Die Demontage des Bohrungssicherungsrings erfolgt analog zur Montage.

Weiter ist aus der DE 19 69 834 U ein Bohrungssicherungsring als solcher bekannt: er umfasst zwei Betätigungselemente sowie ein kreisbogenförmiges Federelement. Die Betätigungselemente sind außerhalb des Außendurchmessers des Bohrungssicherungsringes angeordnet. Er ist insbesondere zur Befestigung eines Wälzlagers vorgesehen.

Wenn der Bohrungssicherungsring konstruktionsbedingt axial zwischen den Baugruppen angeordnet sein muss, damit er außerhalb der Lastzone der Baugruppe angeordnet ist, hat der vorbekannte Bohrungssicherungsring den Nachteil, dass er eine aufwendige Montage bzw. Demontage erfordert, die in der Regel mehrere separate Arbeitsschritte umfasst. Dazu dürfen bei der Montage ggf. bestimmte Baugruppen noch nicht montiert sein, um den Bohrungssicherungsring platzieren zu können. Bei der Demontage müssen ggf. vorher andere Baugruppen demontiert werden, um den Bohrungssicherungsring demontieren zu können. Somit ist eine schnelle und einfache Montage bzw. Demontage nicht möglich. Die Verwendung vormontierter Baugruppen wird so erschwert.

Die Aufgabe der Erfindung ist die Bereitstellung einer verbesserten Baugruppe, deren Anwendung Vormontage erlaubt und die obengenannten Nachteile vermeidet.

Die erfindungsgemäße Lösung liegt in den Merkmalen der unabhängigen Ansprüche. Vorteilhafte Weiterbildungen sind Gegenstand der abhängigen Ansprüche.

Die Lösung umfasst eine Baugruppe für ein Baukastengetriebe, die eine erste und eine zweite Distanzhülse umfasst, wobei die Distanzhülsen jeweils eine Hälfte einer Außennut des Getriebebauteils aufweisen, und in der Außennut ein Bohrungssicherungsring vorgesehen ist, der ein erstes und ein zweites Betätigungselement sowie ein kreisbogenförmiges Federelement umfasst, das ein erstes und ein gegenüberliegendes zweites Ende aufweist. Der Bohrungssicherungsring umfasst am ersten Ende einen ersten nach außen weisenden Vorsprung und am zweiten Ende einen zweiten nach außen weisenden Vorsprung, wobei das erste und zweite Betätigungselement außerhalb des Außendurchmessers des Bohrungssicherungsringes angeordnet sind, wobei der Bohrungssicherungsring in die Außennut voll versenkbar ist.

Weiter umfasst die Lösung ein Baukastengetriebe, das mindestens eine Baugruppe und eine Aufnahmebohrung zur Aufnahme der Baugruppe aufweist, wobei die Baugruppe eine erste und eine zweite Distanzhülse umfasst, wobei die Distanzhülsen jeweils eine Hälfte einer Außennut der Baugruppe aufweisen, und in der Außennut ein Bohrungssicherungsring vorgesehen ist, der ein erstes und ein zweites Betätigungselement sowie ein kreisbogenförmiges Federelement umfasst, das ein erstes und ein gegenüberliegendes zweites Ende aufweist, und der Bohrungssicherungsring am ersten Ende einen ersten nach außen weisenden Vorsprung und am zweiten Ende einen zweiten nach außen weisenden Vorsprung umfasst, wobei das erste und zweite Betätigungselement außerhalb des Außendurchmessers des Bohrungssicherungsringes auf den Vorsprüngen angeordnet sind, wobei der Bohrungssicherungsring in die Außennut voll versenkbar ist; wobei die Aufnahmebohrung einen axialen Schlitz, an dem eine radial verlaufende Nut beginnt und endet, aufweist und die Baugruppe eine Außennut aufweist, welche im montierten Zustand mit der Nut fluchtet. Im Übrigen ist der Bohrungssicherungsring wie vorstehend beschrieben ausgeführt.

Die Erfindung beruht auf dem Gedanken, den Bohrungssicherungsring im versenkten Zustand betätigen zu können, ohne vorher andere Baugruppen demontieren zu müssen. Dazu weist der Bohrungssicherungsring an jedem Ende des Federelements einen Vorsprung auf. Die Vorsprünge ragen über den vom Federelement definierten Umrißkreis radial nach außen weg. Dementsprechend liegen die "freien" Enden der Vorsprünge außerhalb eines durch das Federelement definierten Kreises.

Die Vorsprünge sind so ausgeführt, dass sie bei der Anordnung des Bohrungssicherungsrings in einer Nut innerhalb der Aufnahmebohrung durch den erfindungsgemäßen Schlitz der Aufnahmebohrung eingeführt sind. Ist der Bohrungssicherungsring in der Nut angeordnet, ragen die Vorsprünge durch den Schlitz aus der Aufnahmebohrung hervor und können weiterhin betätigt werden.

Durch diese Anordnung kann der erfindungsgemäße versenkte Bohrungssicherungsring demnach von außerhalb der Aufnahmebohrung betätigt werden, auch wenn er zwischen einer versenkten Baugruppe und einer Aufnahmebohrung angeordnet ist.

Dies ermöglicht eine freie Anordnung des Bohrungssicherungsrings zwischen einer Aufnahmebohrung und einer Baugruppe. Insbesondere ist eine versenkte Anordnung ohne großen Aufwand möglich. Lastzonen, in denen eine Platzierung des Bohrungssicherungsrings bisher konstruktionsbedingt nicht möglich war, können bei der Anordnung des Bohrungssicherungsrings durch die Erfindung auf einfache Weise berücksichtigt werden.

Weiter werden dank der Erfindung separate Arbeitsschritte für die Montage des Bohrungssicherungsrings und der einzelnen Baugruppe vermieden. Dies ermöglicht einen modularen Aufbau des Getriebes. Damit können vormontierte Baugruppen genutzt werden, wodurch eine schnelle Montage und schnelle Demontage ermöglicht wird. So können z. B. an einer Baugruppe schon weitere Bauteile montiert sein, bevor sie in der Aufnahmebohrung montiert wird.

Die Module der Baugruppe werden aneinander angeordnet, wobei der erfindungsgemäße Bohrungssicherungsring in einer für ihn vorgesehenen Außennut angeordnet wird. Die an ihn angrenzenden Module bilden dabei die Seitenwände der Außennut. Die angrenzenden Module weisen vorzugsweise eine Zentrierhilfe auf, die ein Abgleiten verhindert. Der Bohrungssicherungsring braucht bei der Montage der Baugruppe nicht verbogen zu werden. Zum Abschluss der Montage werden die Module der Baugruppe aneinander befestigt.

Vorzugsweise weist die Nut der Aufnahmebohrung konische Seitenwände auf. Dies erleichtert das Einrasten des Bohrungssicherungsrings.

Die Erfindung ermöglicht durch die Hebelwirkung der Vorsprünge die Nutzung von härter ausgeführten

Federelementen. Dadurch kann der Bohrungssicherungsring größeren axialen Kräften standhalten als vorher.

Vorzugsweise sind die Vorsprünge als länglich ausgeformte Stege ausgeführt, die radial vom Mittelpunkt des Federelements nach außen weisen. Dabei enden die Vorsprünge an einem Radius, der einem Kreis mit 10 bis 100 % größerem Durchmesser als dem Außendurchmesser des Bohrungssicherungsrings entspricht.

Die Betätigungselemente sind vorzugsweise als Augenlöcher ausgeführt. In die Augenlöcher kann in an sich bekannter Weise eine spezielle Zange eingreifen, durch die der Bohrungssicherungsring gespannt und montiert bzw. demontiert werden kann.

Ferner wird ein Verfahren zur Montage einer Baugruppe an ein Baukastengetriebe mit Hilfe eines Bohrungssicherungsrings beschrieben. Die Baugruppe, das Baukastengetriebe und der Bohrungssicherungsring sind dabei gemäß obiger Beschreibung vorgesehen. Das Verfahren umfasst folgende Schritte: Anordnen einer ersten Distanzhülse, eines erfindungsgemäßen Bohrungssicherungsrings und einer zweiten Distanzhülse zu einer Baugruppe; Befestigen der Baugruppenteile aneinander; Spannen des Bohrungssicherungsrings an der Baugruppe durch Kraftwirkung auf die Betätigungselemente, so dass der Bohrungssicherungsring vollständig in der Außennut versenkt ist; Anordnen der Baugruppe in die Aufnahmebohrung eines Baukastengetriebes mit gespanntem Bohrungssicherungsring; und Entspannen des Bohrungssicherungsrings an der eingesetzten Baugruppe durch Lösung der Krafteinwirkung auf die Betätigungselemente, so dass der Bohrungssicherungsring jeweils hälftig in der Nut und der Außennut versenkt ist.

Weiter ist ein Verfahren zur Demontage einer Baugruppe an ein Baukastengetriebe mit Hilfe eines Bohrungssicherungsrings vorgesehen, die vorstehend beschrieben sind. Das Verfahren umfasst folgende Schritte: Spannen des Bohrungssicherungsrings; und Entfernen der Baugruppe mit gespanntem Bohrungssicherungsring aus der Aufnahmebohrung.

Unter Bezugnahme auf die beigefügten Zeichnungen, in der vorteilhafte Ausführungsbeispiele dargestellt sind, wird die Erfindung nachfolgend erläutert. Es zeigen:
- Fig. 1: eine Darstellung eines Bohrungssicherungsrings gemäß einem ersten Ausführungsbeispiel der Erfindung;

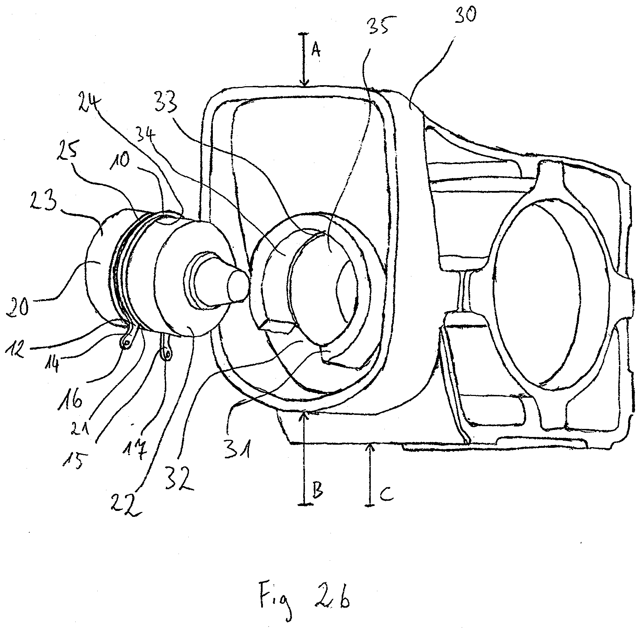

- Fig. 2a, b: eine Baugruppe mit versenktem Bohrungssicherungsring und ein Baukastengetriebe mit geschlitzter Aufnahmebohrung;
- Fig. 3: eine vergrößerte Darstellung der geschlitzten Aufnahmebohrung;
- Fig. 4: ein Axialschnitt durch eine vormontierte Baugruppe mit Bohrungssicherungsring und geschlitzter Aufnahmebohrung;

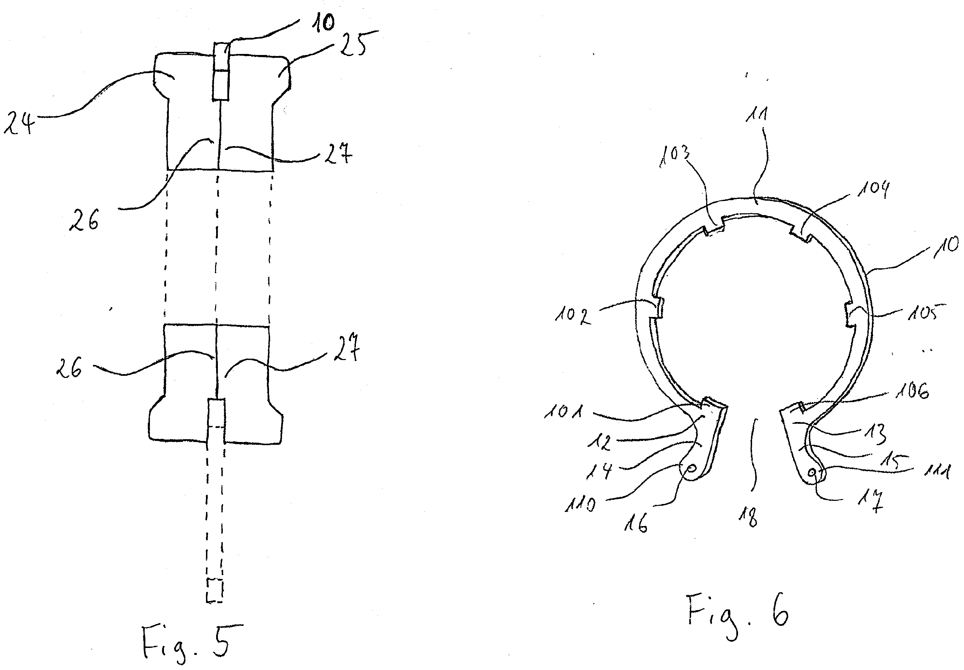

- Fig. 5: ein Axialschnitt durch Distanzhülsen mit Zentrierhilfe und zwischen ihnen angeordnetem Bohrungssicherungsring; und
- Fig. 6: eine Darstellung eines Bohrungssicherungsrings mit Zungen gemäß einem zweiten Ausführungsbeispiel.

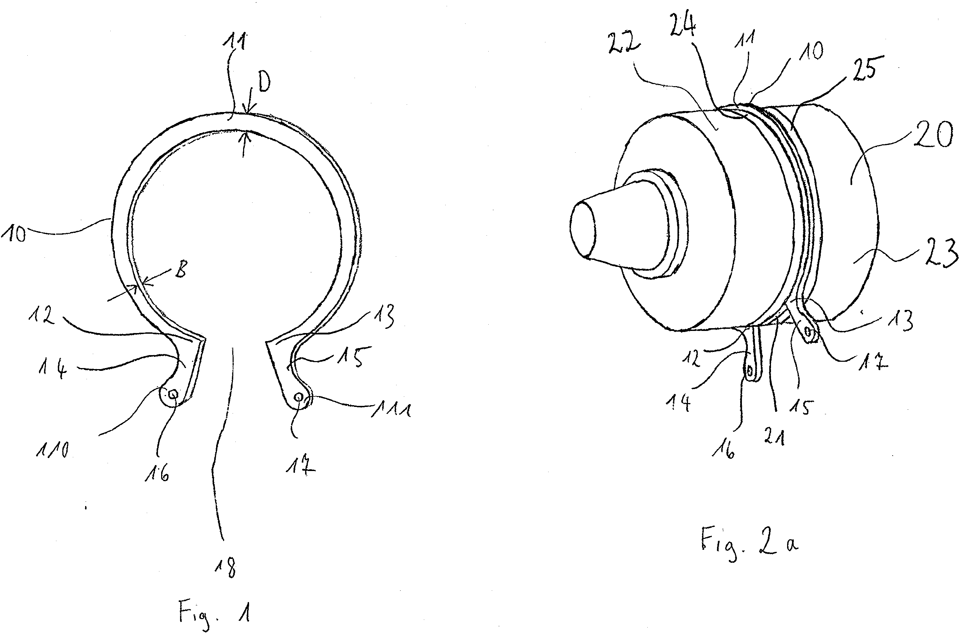

In Fig. 1 ist ein erstes Ausführungsbeispiel für einen Bohrungssicherungsring 10 mit einem kreisbogenförmigen Federelement 11 dargestellt, das ein erstes Ende 12 und ein zweites gegenüberliegendes Ende 13 aufweist. Die beiden Enden 12, 13 begrenzen eine Öffnung 18 des Federelements 11. Weiter umfasst der Bohrungssicherungsring 10 einen ersten Vorsprung 14 und einen zweiten Vorsprung 15, die jeweils an den beiden Enden 12, 13 des Federelements 11 angeordnet sind.

Die beiden Vorsprünge 14, 15 sind bezogen auf das kreisbogenförmige Federelement 11 in radial abragender Richtung angeordnet. Die freien Enden der Vorsprünge 14, 15 bilden Abschnitte 110, 111 aus, die gegenüber der Enden 12, 13 des Federelements 11 angeordnet sind. An den freien Enden der Vorsprünge 14, 15 ist jeweils ein Betätigungselement 16, 17 angeordnet. Die Vorsprünge 14, 15 weisen eine Länge auf, die zwischen 10 % und 100 % des Durchmessers des Federelements 11 liegt. Die Abmessungen sind so gewählt, dass die Abschnitte 110, 111 mit den Betätigungselementen 16, 17 außerhalb des Außendurchmessers des Bohrungssicherungsrings angeordnet sind.

Das Federelement 11 weist eine Dicke D auf, die durch die Differenz des Innen- und Außendurchmessers des Bohrungssicherungsrings definiert wird. Eine Breite B des Federelements 11 ist in axialer Richtung definiert.

Die Betätigungselemente 16, 17 können als Augenlöcher ausgeführt sein, in die eine spezielle Zange eingreifen kann, um den Bohrungssicherungsring zu spannen. Die Augenlöcher sind dabei in den Abschnitten 110, 111 der Vorsprünge 14, 15 angeordnet. Der Durchmesser des Bohrungssicherungsrings 10 wird unter der Wirkung einer Kraft auf die Betätigungselemente 16, 17 verändert. Er kann dabei durch die Betätigung je nach Bedarf verkleinert werden. Dadurch verengt sich die Weite der schlitzartigen Öffnung 18.

Um eine möglichst große Stabilität bei gleichzeitiger hoher Elastizität zu gewährleisten, ist das Federelement 11 aus Federstahl ausgeführt. Je nach den spezifischen Anforderungen an die Sicherungswirkung des Bohrungssicherungsrings 10 kann jedoch auch ein Kunststoff mit den entsprechenden Eigenschaften genutzt werden.

In einem zweiten Ausführungsbeispiel ist der Bohrungssicherungsring 10 mit Zungen 101 - 106 versehen, die über seinen gesamten Umfang auf der Innenseite des Kreisbogens angeordnet sein können. Diese Zungen 101 - 106 dienen dazu, den Kontakt zwischen Baugruppe 20 und Bohrungssicherungsring 10 und damit die Haltewirkung zu erhöhen. Im Übrigen entspricht das zweite Ausführungsbeispiel dem vorstehend beschriebenen ersten Ausführungsbeispiel.

Die Benutzung des Bohrungssicherungsrings 10 wird in diesem Ausführungsbeispiel anhand der Montage einer Baugruppe 20 und der darauffolgenden Montage dieser vormontierten Baugruppe 20 in einem Baukastengetriebe 30 erläutert, ist aber nicht auf dieses beschränkt.

Zunächst wird der Aufbau der Baugruppe 20 erläutert. Bei dem dargestellten Ausführungsbeispiel bildet die Baugruppe 20 eine Lagerung für eine Antriebswelle; die Baugruppe kann aber auch eine andere Funktion haben. Sie weist an ihrem Außenmantel eine umlaufende Außennut 21 auf, die in Kombination mit dem Bohrungssicherungsring 10 zur Befestigung dient. Die Baugruppe 20 umfasst einen ersten und einen zweiten äußeren Lagerring 22, 23 und eine erste und zweite Distanzhülse 24, 25. Weitere Module der Baugruppe werden aus Gründen der Übersichtlichkeit an dieser Stelle nicht erwähnt. Die Distanzhülsen 24, 25 bilden jeweils eine Seitenwand der Außennut 21.

Der erste Lagerring 22 und die erste Distanzhülse 24 liegen mit ihren einander zugewandten Seitenflächen bündig aneinander. Die andere, von dem Lagerring 22 wegweisende Seitenfläche der Distanzhülse 24 bildet eine der Seitenwände der Außennut 21, die als Aufnahme für den Bohrungssicherungsring 10 fungiert. Die andere Seitenwand der Außennut 21 ist gebildet von einer Seitenfläche der zweiten Distanzhülse 25, an der der zweite äußere Lagerring 23 bündig anliegt. Die Distanzhülsen 24, 25 weisen dabei Schultern 26, 27 als Zentrierhilfen auf, die ein Abgleiten des Bohrungssicherungsrings 10 zwischen die Distanzhülsen 24, 25 verhindert. Die Zentrierhilfe kann auch als gesondertes Bauelement ausgeführt sein. Danach erfolgt eine Befestigung der Baugruppenteile aneinander. Dies kann beispielsweise durch Verschraubung bewirkt werden.

Die Außennut 21 weist eine Tiefe auf, die mindestens der Dicke D des Bohrungssicherungsrings 10 entspricht, so dass der Bohrungssicherungsring 10 mit Ausnahme der Vorsprünge 14, 15 durch Verkleinerung seines Radius in der Nut 21 versenkt werden kann. Die Nut 21 ist so auf den aufzunehmenden Bohrungssicherungsring 10 abgestimmt, dass der in ihr angeordnete Bohrungssicherungsring 10 im entspannten Zustand hälftig in ihr versenkt ist. Die Außennut 21 der Baugruppe 20 weist die gleiche Breite auf, wie die Breite B des Bohrungssicherungsrings 10, und zwar in der Weise, dass sich eine Spielpassung ergibt.

Im Folgenden wird die Montage der vormontierten Baugruppe 20 an einem Baukastengetriebe 30 erläutert. Das Baukastengetriebe 30 weist eine Aufnahmebohrung 31 auf, in der die Baugruppe 20 angeordnet wird. Die Aufnahmebohrung 31 weist an ihrem Innenmantel eine umlaufende Nut 33 auf, die an der Innenseite der Aufnahmebohrung 31 zur Aufnahme des Bohrungssicherungsrings 10 angeordnet ist. Die Nut 33 weist die gleiche Breite auf wie die Außennut 21 zur Aufnahme des Bohrungssicherungsrings 10 im Sinne einer Spielpassung, so dass er in ihr angeordnet werden kann. Ihre Tiefe ist so gewählt, dass der Bohrungssicherungsring 10 im entspannten oder mit leicht verkleinertem Durchmesser gespannten Zustand in radialer Richtung hälftig in ihr versenkt werden kann. Ihre Seitenwände können leicht konisch sein, vorzugsweise mit einem Konuswinkel von etwa 2 bis 10 Grad.

Die Nut 33 teilt die Aufnahmebohrung 31 in zwei Bereiche 34, 35. Mindestens ein Bereich 34 weist senkrecht zur Achse der Aufnahmebohrung eine Weite auf, die mindestens so groß wie die Weite der Baugruppe 20 im Bereich der Außennut 21 und kleiner ist als der Außenradius des Bohrungssicherungsrings 10.

Die Aufnahmebohrung 31 weist an einem Teil ihres Umfangs einen breiten axialen Schlitz 32 auf, der sich über den gesamten Bereich 34 erstreckt und zweckmäßigerweise an der Nut 33 endet.

Für die Montage der vormontierten Baugruppe 20 in ein Baukastengetriebe 30 wird der Radius des Bohrungssicherungsrings 10 in der Außennut 21 durch eine Krafteinwirkung auf die Betätigungselemente 16, 17 so verkleinert, dass der Außenradius des Bohrungssicherungsrings 10 mit Ausnahme der Vorsprünge 14, 15 in der Außennut 21 versenkt ist. Es ist nun möglich, die Baugruppe 20 mitsamt dem Bohrungssicherungsring 10 in die Aufnahmebohrung 31 des Baukastengetriebes 30 einzusetzen. Die Vorsprünge 14, 15 werden hierbei durch den Schlitz 32 der Aufnahmebohrung 31 geführt.

Hat die Baugruppe 20 in der Aufnahmebohrung 31 ihre Montageposition erreicht, so fluchtet die Außennut 21 der Baugruppe 20 mit der Nut 33 der Aufnahmebohrung 31. Durch Entspannen des Bohrungssicherungsrings 10 wird er radial in die Nut 33 eingeführt und auf diese Weise hälftig in ihr angeordnet. Die konischen Seitenwände der Nut 33 vereinfachen das Einführen des Bohrungssicherungsrings 10 in die Nut 33.

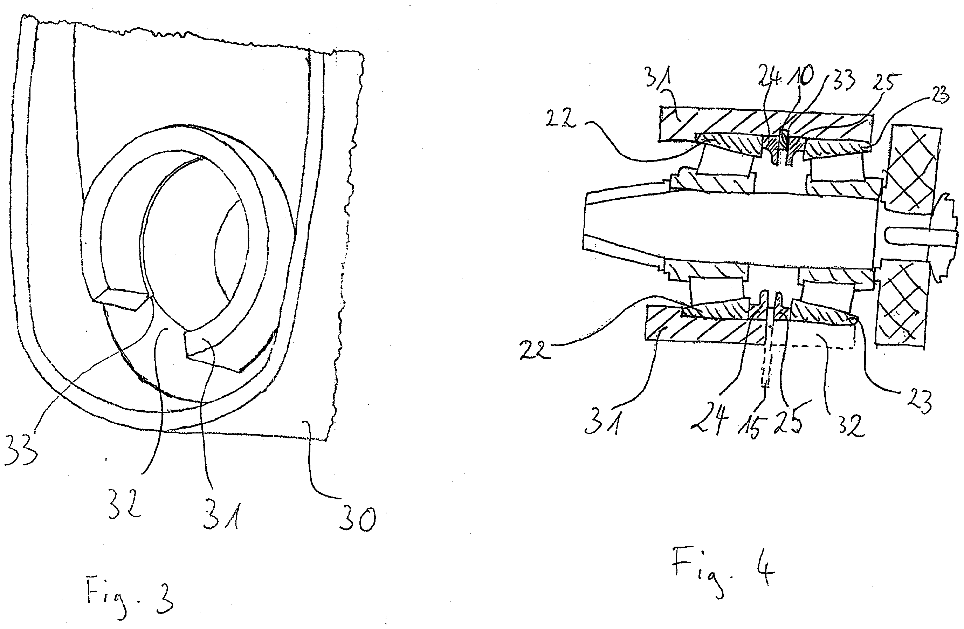

In diesem Zustand ist der Bohrungssicherungsring 10, wie in Fig. 4 dargestellt, jeweils hälftig mit der Aufnahmebohrung 31 und der Baugruppe 20 gekoppelt. Durch ihn werden axiale Kräfte zwischen der Aufnahmebohrung 31 und der Baugruppe 20 übertragen.

Damit ist es erfindungsgemäß ermöglicht, dass die Baugruppe 20 schon vor der Montage mit weiteren Modulen verbunden ist. Demnach können vormontierte Baugruppen verwendet werden, die einfach und schnell an einem Baukastengetriebe 30 montiert werden können.

Die Demontage der Baugruppe 20 wird entsprechend umgekehrt zur Montage durchgeführt. Sie kann als ganze Baugruppe, verbunden mit weiteren Baugruppen, demontiert werden. Die Betätigungselemente 16, 17 ragen radial aus der Aufnahmebohrung 31 heraus und können so zur Demontage zusammengedrückt und entlang des axialen Schlitzes 32 herausbewegt werden. Dabei wird in einem ersten Schritt der Radius des Bohrungssicherungsrings 10 durch Krafteinwirkung auf die Betätigungselemente 16, 17 an den Vorsprüngen 14, 15 verkleinert, so dass er nicht mehr in der Nut 33 der Aufnahmebohrung 31 angeordnet und vollständig in der Außennut 21 der Baugruppe 20 versenkt ist. Die Krafteinwirkung kann dabei durch eine spezielle Zange (nicht dargestellt) erfolgen, deren Maul in die Betätigungselemente 16, 17 eingreift.

In einem zweiten Schritt wird die Baugruppe 20 bzw. die gesamte Baugruppe mitsamt dem Bohrungssicherungsring 10 aus der Aufnahmebohrung 31 entfernt, wobei die Betätigungselemente 16, 17 im zusammengedrückten Zustand durch den axialen Schlitz 32 geführt werden.

Durch Lösen der Befestigung können die Baugruppenteile 10, 22, 23, 24, 25 voneinander gelöst werden.

## Patentansprüche

1. Baugruppe für ein Baukastengetriebe (30),
**dadurch gekennzeichnet, dass**
die Baugruppe (20) eine erste und eine zweite Distanzhülse (24, 25) umfasst, wobei die Distanzhülsen (24, 25) jeweils eine Hälfte einer Außennut (21) der Baugruppe (20) aufweisen, und in der Außennut (21) ein Bohrungssicherungsring (10) vorgesehen ist, der ein erstes und ein zweites Betätigungselement (16, 17) sowie ein kreisbogenförmiges Federelement (11) umfasst, das ein erstes und ein gegenüberliegendes zweites Ende (12, 13) aufweist, und der Bohrungssicherungsring (10) am ersten Ende (12) einen ersten nach außen weisenden Vorsprung (14) und am zweiten Ende (13) einen zweiten nach außen weisenden Vorsprung (15) umfasst, wobei das erste und zweite Betätigungselement (16, 17) außerhalb des Außendurchmessers des Bohrungssicherungsringes (10) auf den Vorsprüngen (14, 15) angeordnet sind, wobei der Bohrungssicherungsring (10) in die Außennut (21) voll versenkbar ist.

2. Baugruppe nach Anspruch 1,
**dadurch gekennzeichnet, dass**
die Distanzhülsen (24, 25) jeweils eine Zentrierhilfe (26, 27) aufweisen.

3. Baugruppe nach Anspruch 1 und 2,
**dadurch gekennzeichnet, dass**
die Vorsprünge (14, 15) als längliche Stege ausgeformt sind.

4. Baugruppe nach den Ansprüchen 1 bis 3,
**dadurch gekennzeichnet, dass**
die Vorsprünge (14, 15) vom Mittelpunkt des Federelements (11) radial nach außen angeordnet sind, wobei sie eine Länge aufweisen, die 10% bis 100% des Durchmessers des Federelements (11) entspricht.

5. Baugruppe nach einem der vorangegangenen Ansprüche,
**dadurch gekennzeichnet, dass**
die Betätigungselemente (16, 17) Augenlöcher sind.

6. Baugruppe nach einem der vorangegangenen Ansprüche,
**dadurch gekennzeichnet, dass**
der Bohrungssicherungsring (10) Zungen (101 - 106) aufweist, die innen über dessen Umfang verteilt angeordnet sind.

7. Baugruppe nach einem der vorangegangenen Ansprüche,
**dadurch gekennzeichnet, dass**
der Bohrungssicherungsring (10) aus Metall, Federstahl oder Kunststoff ausgestaltet ist.

8. Baukastengetriebe, das eine Baugruppe (20) nach einem der Ansprüche 1 bis 7 und mindestens eine Aufnahmebohrung (31) zur Aufnahme der Baugruppe (20) aufweist,
**dadurch gekennzeichnet, dass**
die Aufnahmebohrung (31) einen axialen Schlitz (32), an dem eine radial verlaufende Nut (33) beginnt und endet, aufweist;
die Außennut (21) im montierten Zustand mit der Nut (33) fluchtet; und
wobei der Bohrungssicherungsring (10) in die Nut (33) zumindest teilsweise und die Außennut (21) voll versenkbar ist.

9. Baukastengetriebe nach Anspruch 8,
**dadurch gekennzeichnet, dass**
die Nut (33) konische Seitenwände aufweist.

10. Baukastengetriebe nach Anspruch 8 oder 9,
**dadurch gekennzeichnet, dass**
die Baugruppe (20) nach Anspruch 2 weitergebildet ist.

11. Verfahren zur Montage einer Baugruppe (20) an ein Baukastengetriebe (30) mit Hilfe eines Bohrungssicherungsrings (10),
**gekennzeichnet durch** folgende Schritte:
Anordnen der ersten Distanzhülse (24), des Bohrungssicherungsrings (10) und der zweiten Distanzhülse (25) zu der Baugruppe (20) nach einem der Ansprüche 1 bis 7;
Befestigen der Baugruppenteile (24, 25) aneinander;
Spannen des Bohrungssicherungsrings (10) an der Baugruppe (20) durch Kraftwirkung auf die Betätigungselemente (16, 17), so dass der Bohrungssicherungsring (10) vollständig in der Außennut (21) versenkt ist;
Einsetzen der Baugruppe (20) in die Aufnahmebohrung (31) eines Baukastengetriebes (30) mit gespanntem Bohrungssicherungsring (10); und
Entspannen des Bohrungssicherungsrings (10) an der eingesetzten Baugruppe (20) durch Lösung der Krafteinwirkung auf die Betätigungselemente (16, 17), so dass der Bohrungssicherungsring (10) jeweils hälftig in der Nut (33) und der Außennut (21) versenkt ist.

12. Verfahren zur Demontage einer Baugruppe (20) an ein Baukastengetriebe (30) mit Hilfe eines Bohrungssicherungsrings (10),
**gekennzeichnet durch** folgende Schritte:
Spannen des Bohrungssicherungsrings (10); und
Entfernen der Baugruppe (20) nach einem der Ansprüche 1 bis 7 mit gespanntem Bohrungssicherungsring (10) aus der Aufnahmebohrung (31).

## Claims

1. Module for a modular transmission (30), **characterized in that** the module (20) comprises a first and a second spacer sleeve (24, 25), the spacer sleeves (24, 25) having in each case one half of an outer groove (21) of the module (20), and a bore securing ring (10) being provided in the outer groove (21), which bore securing ring (10) comprises a first and a second actuating element (16, 17) and an arcuate spring element (11) which has a first and an opposite second end (12, 13), and the bore securing ring (10) comprising, at the first end (12), a first outwardly pointing projection (14) and, at the second end (13), a second outwardly pointing projection (15), the first and second actuating element (16, 17) being arranged on the projections (14, 15) outside the external diameter of the bore securing ring (10), it being possible for the bore securing ring (10) to be sunk completely into the outer groove (21).

2. Module according to Claim 1, **characterized in that** the spacer sleeves (24, 25) in each case have a centring aid (26, 27).

3. Module according to Claims 1 and 2, **characterized in that** the projections (14, 15) are formed as elongate webs.

4. Module according to Claims 1 to 3, **characterized in that** the projections (14, 15) are arranged radially towards the outside from the centre point of the spring element (11), the said projections (14, 15) having a length which corresponds to from 10% to 100% of the diameter of the spring element (11).

5. Module according to one of the preceding claims, **characterized in that** the actuating elements (16, 17) are eyelet holes.

6. Module according to one of the preceding claims, **characterized in that** the bore securing ring (10) has tongues (101-106) which are arranged on the inside such that they are distributed over the circumference of the said bore securing ring (10).

7. Module according to one of the preceding claims, **characterized in that** the bore securing ring (10) is configured from metal, spring steel or plastic.

8. Modular transmission which has a module (20) according to one of Claims 1 to 7 and at least one receiving bore (31) for receiving the module (20), **characterized in that** the receiving bore (31) has an axial slot (32), at which a radially running groove (33) begins and ends; the outer groove (21) is flush with the groove (33) in the mounted state; and it being possible for the bore securing ring (10) to be sunk into the groove (33) at least partially and into the outer groove (21) completely.

9. Modular transmission according to Claim 8, **characterized in that** the groove (33) has conical side walls.

10. Modular transmission according to Claim 8 or 9, **characterized in that** the module (20) is developed according to Claim 2.

11. Method for mounting a module (20) on a modular transmission (30) with the aid of a bore securing ring (10), **characterized by** the following steps:
arranging of the first spacer sleeve (24), the bore securing ring (10) and the second spacer sleeve (25) to form the module (20) according to one of Claims 1 to 7;
fastening of the module parts (24, 25) to one another;
stressing of the bore securing ring (10) on the module (20) by way of an action of force on the actuating elements (16, 17), with the result that the bore securing ring (10) is sunk completely in the outer groove (21);
inserting of the module (20) into the receiving bore (31) of a modular transmission (30) with a stressed bore securing ring (10); and
relieving of the bore securing ring (10) on the inserted module (20) by way of the cancellation of the action of force on the actuating elements (16, 17), with the result that the bore securing ring (10) is sunk in each case half-way in the groove (33) and the outer groove (21).

12. Method for dismantling a module (20) on a modular transmission (30) with the aid of bore securing ring (10), **characterized by** the following steps:
stressing of the bore securing ring (10); and
removing of the module (20) according to one of Claims 1 to 7 with a stressed bore securing ring (10) from the receiving bore (31).

## Revendications

1. Module de construction pour une transmission modulaire (30),
**caractérisé en ce que**
le module (20) comporte une première et une deuxième douille d'écartement (24, 25), les douilles d'écartement (24, 25) présentant chacune une moitié d'une nervure extérieure (21) du module (20), une bague (10) de protection d'alésage étant prévue dans la rainure extérieure (21) et comprenant un premier et un deuxième élément d'actionnement (16, 17) ainsi qu'un élément élastique (11) en forme d'arc de cercle qui présente une première extrémité et une deuxième extrémité (12, 13) opposée à la première,
**en ce que** la bague (10) de protection d'alésage comporte sur la première extrémité (12) une première saillie (14) orientée vers l'extérieur et sur la deuxième extrémité (13) une deuxième saillie (15) orientée vers l'extérieur,
**en ce que** le premier et le deuxième élément d'actionnement (16, 17) sont disposés à l'extérieur du diamètre extérieur de la bague (10) de protection d'alésage, sur les saillies (14, 15) et
**en ce que** la bague (10) de protection d'alésage peut être complètement enfoncée dans la rainure extérieure (21).

2. Module selon la revendication 1, **caractérisé en ce que** les douilles d'écartement (24, 25) présentent chacune un accessoire de centrage (26, 27).

3. Module selon les revendications 1 et 2, **caractérisé en ce que** les saillies (14, 15) sont configurées comme nervures allongées.

4. Module selon les revendications 1 à 3, **caractérisé en ce que** les saillies (14, 15) sont disposées radialement vers l'extérieur partant du centre de l'élément élastique (11) et présentent une longueur qui correspond à entre 10 % et 100 % du diamètre de l'élément élastique (11).

5. Module selon l'une des revendications précédentes, **caractérisé en ce que** les éléments d'actionnement (16, 17) sont des oeillets.

6. Module selon l'une des revendications précédentes, **caractérisé en ce que** la bague (10) de protection d'alésage présente des languettes (101-106) réparties côté intérieur sur sa périphérie.

7. Module selon l'une des revendications précédentes, **caractérisé en ce que** la bague (10) de protection d'alésage est réalisée en métal, en acier à ressort ou en matière synthétique.

8. Transmission modulaire qui présente un module (20) selon l'une des revendications 1 à 7 et au moins un alésage de réception (31) qui reprend le module (20),
**caractérisée en ce que**
l'alésage de réception (31) présente une fente axiale (32) sur laquelle une rainure (33) s'étendant radialement commence et se termine,
**en ce que** la rainure extérieure (21) est alignée sur la rainure (33) en position montée et
**en ce que** la bague (10) de protection d'alésage peut être enfoncée au moins en partie dans la rainure (33) et complètement dans la rainure extérieure (21).

9. Transmission modulaire selon la revendication 8, **caractérisée en ce que** la rainure (33) présente des parois latérales coniques.

10. Transmission modulaire selon les revendications 8 ou 9, **caractérisée en ce que** le module (20) est transformé selon la revendication 2.

11. Procédé de montage d'un module (20) sur une transmission modulaire (30) à l'aide d'une bague (10) de protection d'alésage,
**caractérisé par** les étapes suivantes :
placement d'une première douille d'écartement (24), de la bague (10) de protection d'alésage et de la deuxième douille d'écartement (25) sur le module (20) selon l'une des revendications 1 à 7,
fixation des parties (24, 25) du module l'une sur l'autre,
serrage de la bague (10) de protection d'alésage sur le module (20) par action d'une force sur les éléments d'actionnement (16, 17) de telle sorte que la bague (10) de protection d'alésage soit enfoncée complètement dans la rainure extérieure (21),
insertion du module (20) dans l'alésage de réception (31) d'une transmission modulaire (30) avec la bague (10) de protection d'alésage serrée et
détente de la bague (10) de protection d'alésage placée sur le module (20) inséré en interrompant l'action de la force sur les éléments d'actionnement (16, 17) de telle sorte que la bague (10) de protection d'alésage s'enfonce chaque fois à moitié dans la rainure (33) et dans la rainure extérieure (21).

12. Procédé de démontage d'un module (20) monté sur une transmission modulaire (30) à l'aide d'une bague (10) de protection d'alésage,
**caractérisé par** les étapes suivantes:
serrage de la bague (10) de protection d'alésage et
enlèvement du module (20) selon l'une des revendications 1 à 7 hors de l'alésage de réception (31), la bague (10) de protection d'alésage étant serrée.
